# EUROPEAN PATENT SPECIFICATION

(11) **EP 2 981 173 B1**
(45) Date of publication and mention of the grant of the patent: **03.05.2017**
(21) Application number: 14717493.2
(22) Date of filing: 20.03.2014
(51) Int. Cl.: A22C 21/00, A22B 5/00, A22C 21/04, F25D 13/06, A23B 4/30

(54) **SHACKLE FOR HANGING POULTRY TRANSPORTATION, POULTRY COOLING UNIT AND METHOD FOR COOLING OF HANGING POULTRY**
BÜGEL ZUM AUFHÄNGEN UND FÖRDERN VON GEFLÜGEL, GEFLÜGELKÜHLEINHEIT UND VERFAHREN ZUM KÜHLEN VON HÄNGENDEM GEFLÜGEL
ÉTRIER POUR LE TRANSPORT DE VOLAILLES SUSPENDUES, UNITÉ DE REFROIDISSEMENT DE VOLAILLES ET PROCÉDÉ DE REFROIDISSEMENT DE VOLAILLES SUSPENDUES

(30) Priority: 05.04.2013 NL 2010580
(43) Date of publication of application: 10.02.2016
(73) Proprietor: Marel Stork Poultry Processing B.V., 5831 AV Boxmeer (NL)
(72) Inventor: HIDDINK, Wilbert, NL-7051 HC Varsseveld (NL); PETERS, Erik Hendrikus Werner, NL-5831 CX Boxmeer (NL); KROOT, Marc, NL-5845 EZ Sint Anthonis (NL); VAN ESBROECK, Maurice Eduardus Theodorus, NL-6681 AR Bemmel (NL)
(74) Representative: Patentwerk B.V.
(86) International application number: PCT/NL2014/050167
(87) International publication number: WO 2014/163489

(56) References cited:
- EP-A1- 0 651 215
- WO-A1-03/039263
- WO-A1-2010/062173
- GB-A- 2 077 567
- US-A- 3 686 712

## Description

The present invention relates to a shackle for hanging poultry transportation. The invention also provides a poultry transportation unit. Furthermore the invention relates and to a method for cooling of hanging poultry and a method for hanging poultry carcasses to poultry shackles.

During the automated processing of poultry various types of operations are performed on the carcass. Normally the poultry is hanged with their legs to shackles or brackets to transport the poultry along a predetermined transport path. Such transport path is usually dictated by an overhead conveyor. Various types of shackle structures and conveyor types for such poultry transportation are known. During transportation of the poultry hanging on the shackles various types of processes can be performed on the poultry carcasses. After the actual slaughtering and normally at least partial evisceration of the carcasses the relative warm poultry carcasses are cooled to lower temperatures so to lengthen the shelf life of the perishable poultry carcasses. The cooling requires a relative long time period and can be performed by leading the shackles holding the poultry carcasses through a temperature controlled environment (e.g. a cooling tunnel). The prior art cooling equipment has normally long processing paths, taking up much space and requiring serious investments.

A cooling device and method for cooling slaughtered poultry carcasses is disclosed in EP 0 651 215. In a cooling chamber which is provided with conveyor means the poultry carcasses are conveyed while a cooling medium is supplied to the poultry carcasses. In the cooling chamber cooling medium supply means are provided with one or more openings which are situated near the path to be taken by the poultry carcasses such that the cooling medium is guided towards outside of the poultry carcasses. WO 03/039263 discloses a method of preserving meat of slaughtered poultry, in which the poultry is conveyed through a chilling room, and in the process is exposed to a stream of chilling air. During the chilling of the poultry the skin of the poultry is moistened. The skin is moistened by spraying it with water in a spray area that is separated from the stream of chilling air. US 3,686,712 discloses an improved shackle suspension means, in particular a supporting shackle for supporting a chicken by its hocks from a hock-gripping member. The suspension system includes a mounting bracket, which includes an angular off-set orientating surface detailed to cooperate with a suspension element extending upwardly from the fowl supporting shackle to orient the shackle.

The object of the present invention is, to provide the means and method for cooling slaughtered poultry carcasses that require less space and investments while at least maintaining the effectiveness of the prior art means and methods for cooling slaughtered poultry carcasses.

To realise the enhanced cooling efficiency the invention provides a shackle as defined in claim 1 for hanging poultry transportation provided with at least one fluid flow guide surface for directing a fluid flow towards a position wherein the poultry is to be held by the shackle, normally by attachment hooks incorporated in the shackle. When the shackle for holding the poultry is brought in an environment wherein poultry carcasses are to be cooled with a fluid the shackle according the present invention offers the opportunity to enhance and/or optimise the contact of the fluid with the poultry carcasses and thus to enhance the heat exchange (and thus cooling efficiency) between the cooling fluid and the poultry carcasses. The reason for the enhanced cooling efficiency is that the shackle according the present invention is provided with at least one deflection surface which deflection surface will deflect (or in other words: leads, diverts or guides) a fluid flow to cool the poultry that contacts the deflection surface to the poultry carcass held by the shackle. For that purpose the deflection surface can have any suited shape; it may for instance be flat, curved, concave, convex or more complex from shape. It also may be provided of a channel, tube, conduit, hose or any other type of fluid guide to lead the fluid flow to the poultry carcass or even to lead the fluid flow into the poultry carcass (for instance into the belly cavity of the carcass). Due to the deflection of the cooling fluid flow to the poultry carcass the contact of the fluid with the poultry carcass will be intensified and thus the cooling of the poultry carcass is improved.

The fluid flow to be directed toward the poultry carcass is a fluid flow relative to the shackle; this may be an active generated fluid flow for instance generated by a blower or fan but the fluid flow may also be the result of the movement of the shackle in a relative stationary fooling fluid.

As for the fluid to be use any type of gas, liquid or a gas/liquid mixture may be used including more or less saturated gasses, aerosols, gas carrying droplets, gas containing liquids and so on. For the gas any type of gas may be chosen, in practise often use is made of air and for the liquid also any type of liquid may be chosen while in practise often use is made of water.

In an embodiment the shackle is provided with at least two poultry holding positions. These two poultry holding positions may be located so that one poultry holding position is straight above another poultry holding position. However a poultry holding position may also be located shifted above another poultry holding position. Normally a shackle is also provided with an attachment for coupling the shackle to a transportation system. The attachment may be any type of link of aperture (hole) to attach the shackle to a shackle transportation system. When plural poultry holding positions are placed in line with such attachment these poultry holding positions are normally located straight above each other.

Not only two poultry holding positions can be combined in a single shackle, it is also possible to combine three or more poultry holding positions in a single shackle. The advantage of the plural poultry holding positions in a single shackle according the present invention is that the positioning of the various poultry carcasses to be cooled can be relative more compact and it enables a more efficient use of the transportation and cooling infrastructure. For instance, a cooling line with a specific length can with two or three poultry holding positions on each shackle have a double or triple transportation capacity compared to a cooling line with the same specific length but with single poultry shackles. A prior art problem of plural poultry holding positions combined in a single shackle was that the cooling properties of the various poultry holding positions were very different (diverging) and thus that the cooling quality of the individual poultry carcasses could not sufficiently be controlled while using shackles with plural poultry holding positions. The present invention now is able to solve, or at least to limit, this prior art problem as a shackle with plural poultry holding positions may now be provided with one or more fluid flow guide surfaces that fully or partially compensate the different process conditions for the poultry carcasses held by the "multiple carcass shackle". For instance the poultry carcasses can be positioned such that parts of a poultry carcass are screened by another carcass and a thus these screened parts are located at a "shaded" cooling location. Now a fluid flow guide surface may be located such that a cooling fluid flow is directed towards the former "shaded" cooling location so that the "shade" is neutralized (counterbalanced) and thus plural poultry carcasses can be held with a single shackle while still the quality of the individual poultry carcasses can sufficiently be controlled.

A poultry holding position is provided by two narrowing apertures for holding poultry legs. These narrowing or tapering apertures are designed such that they are suited for holding/clamping the poultry legs with easy access for loading and offload the shackles. Between two of these cooperating narrowing apertures for holding poultry legs an opening in the shackle may be provided to allowing passage of a fluid flow through the shackle to the bottom side of the poultry carcass held by the shackle. The bottom side of the poultry carcass require relative much cooling and thus the access for a fluid to such location may enhance the even cooling of the poultry carcass.

To further enhance the ability to direct a fluid flow towards the rear side of the poultry carcass a fluid flow guide is provided that connects to the opening in the shackle between two cooperating narrowing apertures and that is directed towards the position wherein the poultry carcass is to be held. The advantage of using such a fluid flow is that optimal use can be made of the available fluid flows. The flow guide can have any type of shape for instance the guide may be a tube, a channel, a flow guiding surface and so on.

The shackle may also be provided with a contact element that is at least partially located in a poultry holding position. Such contact element is to be brought at least partially inside a poultry carcass that is held in the poultry holding position and may be used to enhance to opportunity to feed a cooling fluid into a poultry carcass (a carcass opening like a belly opening). The contact element may be any type of fluid flow. Partially cooling the poultry carcass from the inside will further enhance the cooling quality.

A further embodiment of the shackle is provided with liquid reception means. Fluid (liquid) reception means advantageously located under a "higher" poultry carcass holding position so to prevent liquid or liquid particles part of a gas/fluid mixture that has been in contact with or originates from a "higher" poultry carcass to subsequently come in contact with a "lower" poultry carcass held in a "lower" poultry carcass holding position. Such position for liquid reception means can also be defined as "under" an "upper" poultry carcass holding position. When the liquid reception means are provided with at least one liquid outfeed the fluids that are caught (received) by the liquid reception means can controlled be removed.

The shackle according the present invention may also be provided with at least one coupling element for coupling the shackle with another shackle. As shackles with fluid flow guide surfaces will normally be heavier, longer and/or larger than shackles without fluid flow guide surfaces it may be advantageous to couple adjoining shackles so to prevent a shackle to catch an other shackle or to move to much out of an desired position. As an alternative the shackle according the invention may also be provided with a contact surface where adjoining shackles are allowed to contact without the chance of catching.

The shackle may also be rotatable. A rotation around a vertical axis may enable to change the potion of the poultry carcasses in process. To rotation may be provided by a joint which can an integral part of the shackle and the rotation may for instance be initiated by an external rotational control.

The invention also provides a poultry cooling unit comprising: a frame; a driven advancing element carried by the frame; an enclosed space accommodating at least a part of the frame and the driven advancing element, and a cooler for cooling at a least part of the interior of the enclosed space, wherein the cooling unit also comprises a plurality of shackles according the present invention, which shackles are coupled to the advancing element. The frame for carrying the advancing element may be a metal construction partially or fully linked with the enclosed space (e.g. hanging on a ceiling) but may also be a construction that at least partially stands on the floor. The advancing element is normally constructed as a chain or belt that is driven by an electromotor. As for the advantages f the cooling unit according the invention reference is made to the above mentioned advantages of the shackle according the invention; the cooling process taking place in the efficiency of the cooling of the poultry carcasses in the enclosed cooling space as well as the quality of cooling can be enhanced. As for the quality of cooling an equal cooling over the carcasses is aimed for. The present invention is now better enabling difficult to reach carcass parts better to reach with the cooling fluid. On the other side parts that have the tendency to get overcooled (cooled to a to low temperature) can now with the present invention experience relative less influence form the cooling fluid.

In the cooling unit adjoining shackles may be linked. Linking of the shackles, apart from their coupling to the advancing element, lead to better controlled mutual positioning of the shackles. As the shackles according the invention can be heavier and/or larger than the prior art shackles outward movement of the shackles at curved parts of the route dictated by the advancing element can be prevented and also uncontrolled mutual contact of adjoining shackles can be prevented (that could lead to product damage, loosing carcasses form the shackles and/or hooking together of shackles).

The cooling unit can be provided with at least one blower for creating a fluid flow directed towards the fluid flow guide surfaces of the shackles. A further option is to include further fluid flow guides in the enclosed space so to even better control the fluid flows in the enclosed cooling space. It will be clear that the better the fluid flows that contact the fluid flow guide surfaces of the shackles the better the resulting fluid flow that contact the poultry carcasses can be controlled.

The blower for creating a fluid flow may be provided with a nozzle that is directed towards the shackles. Various types of cooling can be used in the enclosed cooling space where there is a preference for controlled fluid movement (or stationary movement) of the fluid flows. When in contrast of controlled fluid movement for instance an at least partial turbulent fluid flow (Re > 2300) would occur in the enclosed cooling space the fluid flow resulting from the reflection of the fluid flow guide surfaces of the shackles is not well controllable and thus the cooling of the poultry carcasses is less controllable.

In a further specific embodiment the cooling unit is provided with flow guides that are connected to the advancing element. The flow guides may be directly linked to the advancing element or, as an alternative they may be linked with the individual shackles. Such flow guides move along with the movement of the shackles and can thus be considered as guide surfaces for guiding the cooling fluid toward (specific parts of) the poultry carcasses.

As the cooling unit makes use of the shackles according the invention there may be an additional need for cleaning of the shackles. The cooling unit may thus be provided of a cleaning unit to clean the shackle, preferably in between two subsequent uses of the shackle. Cleaning can be realised by feed a cleaning and/or disinfecting fluid to the shackle but also alternatives like radiation (e.g. with ultraviolet light) and mechanical cleaning (e.g. brushes) may be used or combined to reach a high cleaning level.

The invention also provides a method for cooling of hanging poultry, comprising the method steps; A) hanging poultry on the poultry holding positions of shackles; B) transporting the loaded shackles along a transport path; C) directing a fluid flow to the shackles during the transportation of the loaded shackles along the transport path; and D) reflecting the fluid flow directed from the shackles to the poultry hanging on the shackles to the poultry. According this method the enhanced cooling efficiency and enhanced cooling quality can be reached as already mentioned above. To further enhance the efficiency during step A) multiple poultry can be hug on an individual shackle. The fluid flow directed to the shackles during step C) is a cooling fluid flow but also other conditions may be controlled with the fluid flow apart from the temperature. An example is that also the humidity can be influenced by the conditioning fluid flow. Furthermore the fluid flow may also be used to bring a specific material (disinfectant, surface treating ingredient, taste influencing ingredient like for instance smoke and so on) in contact with the poultry carcasses.

Dependent on the shape of the shackle during step D) the fluid flow may be reflected to an internal aperture in the poultry hanging on the shackles in case such enables to bring a fluid flow in contact with a specific part of the poultry carcasses. And as already explained in relation to the shackle according the present invention during step A) a fluid flow guide may be inserted in the poultry carcasses to enable also cooling of the carcass from the inside and thus to possibly shorten the required cooling time.

There is also provided a method for hanging poultry carcasses to multiple poultry shackles, comprising the method steps; P) automatic registration of individual poultry carcass characteristics, and Q) automatic hanging plural poultry carcasses on various positions on poultry holding positions of each shackle; wherein dependent on the registered individual poultry carcass characteristics the individual carcasses are placed in specific selected positions on the shackles. The process conditions of different shackles or on different poultry holding positions may (intended or unintended) vary during a process where poultry carcasses are hung on shackles to be transported along a transport path during which path a processing of the poultry carcasses takes place. To control the effects of these different process conditions during loading the shackles use can be made of the knowledge that the process conditions vary or at least it enables compensation of the different process conditions undergone by the poultry carcasses in a subsequent process or in the use that is made of the processed poultry carcasses. As an example lighter poultry carcasses can be placed on lower poultry holding positions of each shackle and the heavier carcasses can be placed on the higher poultry holding positions of each shackle as normally the conditions on a higher location in a cooling space (e.g. a cooling tunnel) are cooler than on a lower position. As to automate such process the data on the individual poultry carcass characteristics are preferably led to a automatic process control which automatic process control steers the automatic hanging of the poultry carcasses on the shackles. There for instance the poultry carcasses are hung on the shackles on positions that vary in height or vary in another process related matter. After the processing step Q) the loaded shackles are then transported along a transport path where the processing (e.g. - but not exclusively - cooling) takes place.

A further alternative of the method for hanging poultry carcasses to multiple poultry shackles is that the automated process control steers subsequent process on an individual poultry carcass basis. When the automated process control "knows" what individual processing conditions each poultry carcass has undergone and the automated process control "knows" what the individual poultry carcass characteristics were before the processing started the automated process control can with a high level of accuracy determine what the individual poultry carcass characteristics are after the processing. Such "knowledge" of the individual poultry carcass characteristics are processing provides the opportunity to utilize this information in subsequent processing, to utilize this information which use is made of the individual poultry carcasses or at least to label the processed individual poultry carcasses. The method for hanging poultry carcasses to multiple poultry shackles according the present invention thus enables an enhanced level of process and product control.

The present invention is further elucidated on the basis of the non-limitative exemplary embodiment shown in the following figures. Herein shows:
- figure 1 a perspective view on a shackle according the present invention;
- figures 2A and 2B perspective views on an alternative embodiment of a shackle according the present invention, figure 2A in an unloaded situation and figure 2B in a loaded situation;
- figure 3 a perspective view on the loaded shackle as shown in figure 2B including schematic shown fluid flows;
- figure 4 a perspective view on a loaded poultry cooling unit according the present invention;
- figures 5A and 5B perspective views on details of two parts of a further alternative embodiment of a shackle according the present invention;
- figure 6 a perspective view on a third alternative embodiment of a shackle according the present invention;
- figure 7 a perspective view on a forth alternative embodiment of a shackle according the present invention;
- figure 8 a schematic side view of a loaded fifth alternative embodiment of a shackle according the present invention; and
- figures 9A - 9D four detailed view on the topside of shackle according the present invention provided with various hinge structures.

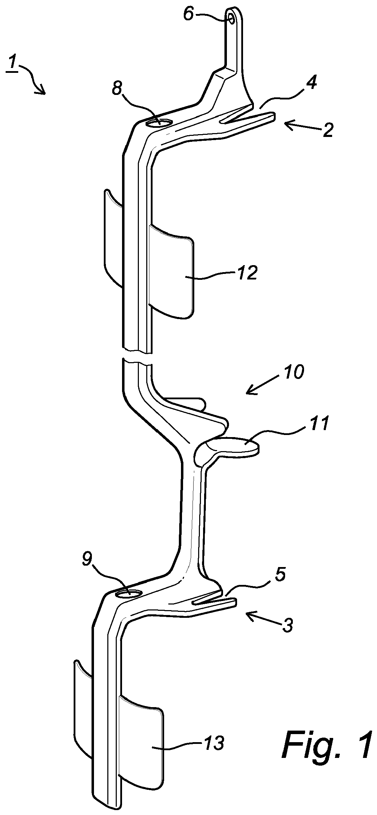

Figure 1 shows shackle 1 with two holding positions 2, 3 for poultry (not shown in this figure). Each of the holding positions 2, 3 is provided of a set of narrowing or tapering apertures 4, 5 of which only one of each set is visible in this figure. The tapering apertures 4, 5 are dimensioned for holding poultry legs. On top of the shackle 1 is an attachment opening 6 for coupling the shackle 1 to a transportation system that is also not shown in this figure. Between each set of poultry leg attachment apertures 4, 5 fluid openings 8, 9 in the shackle 1 are provided to allow a fluid flow to flow through these fluid openings 8, 9 and to get easy access to the poultry carcasses. Between the two poultry holding positions 2, 3 a liquid receptor 10 is positioned to prevent liquid that already has been in contact with the upper poultry carcass (hanging on the holding position 2) drips (flows) onto the lower poultry carcass (hanging on the holding position 3) and so to contaminate the poultry carcass in the lower holding position 3. The liquid receptor 10 has a liquid outfeed 11 to move the collected liquid away from the lower poultry holding position 3. The shackle 1 is also provided of curved panels 12, 13 that can lead (reflect) a fluid flow to a poultry carcass when positioned in a poultry holding position 2, 3.

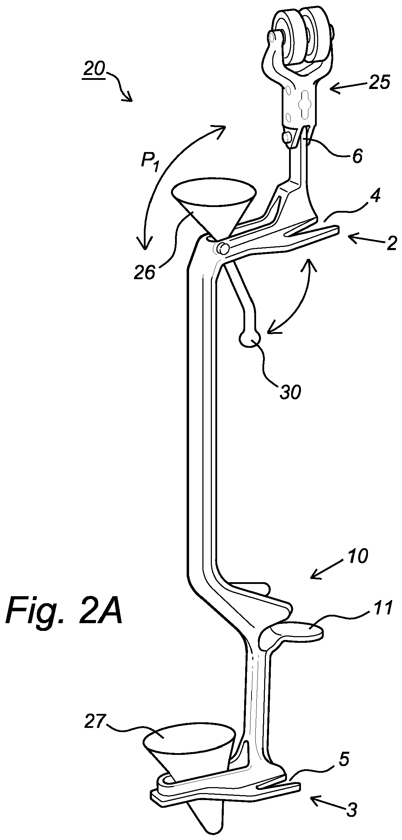

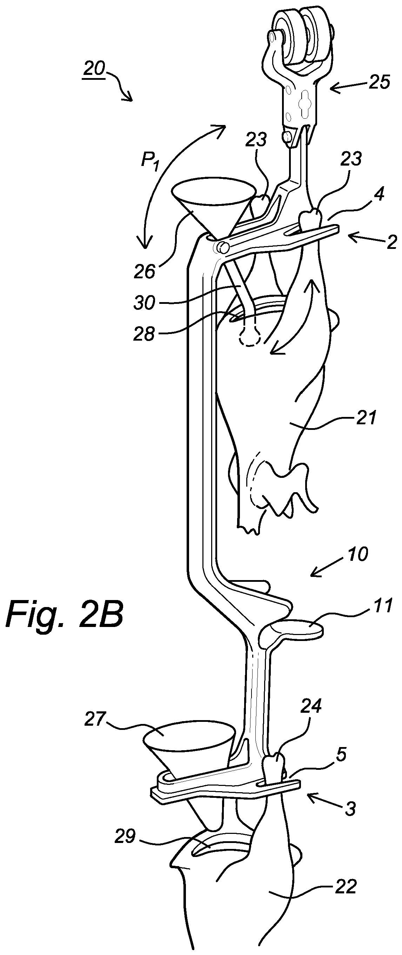

Figures 2A and 2B show an alternative embodiment of a shackle 20 according the present invention. The features of the shackle 20 that correspond with the features of the shackle 1 as shown in fire 1 have identical reference signs. The shackle 20 has two poultry holding positions 2, 3 both provided with a set of narrowing apertures 4, 5. In figure 2B the shackle 20 is loaded with two poultry carcasses 21, 22 showing the poultry legs 23, 24 being held by the tapering apertures 4, 5. On top of the shackle 20 is an attachment opening 6 linked to a carriage 25 that is part of a transportation system. Between the two poultry holding positions 2, 3 also here a liquid receptor 10 with a liquid outfeed 11 is incorporated. Between each set of poultry leg attachment apertures 4, 5 funnels 26, 27 are placed to direct a allow a fluid flow to the poultry carcasses 21, 22 so that the fluid flow can enter the interior of the poultry carcasses 21, 22 via anal apertures 28, 29. The upper funnel 26 is provided of a fluid guide (a pipe) 30 that is brought into the poultry carcass 21 when it is place in the poultry holding position 2. The upper funnel 26 can also swivel (see arrow P1) to adapt the fluid guide's position relative to the poultry carcass 21 (see arrow P2).

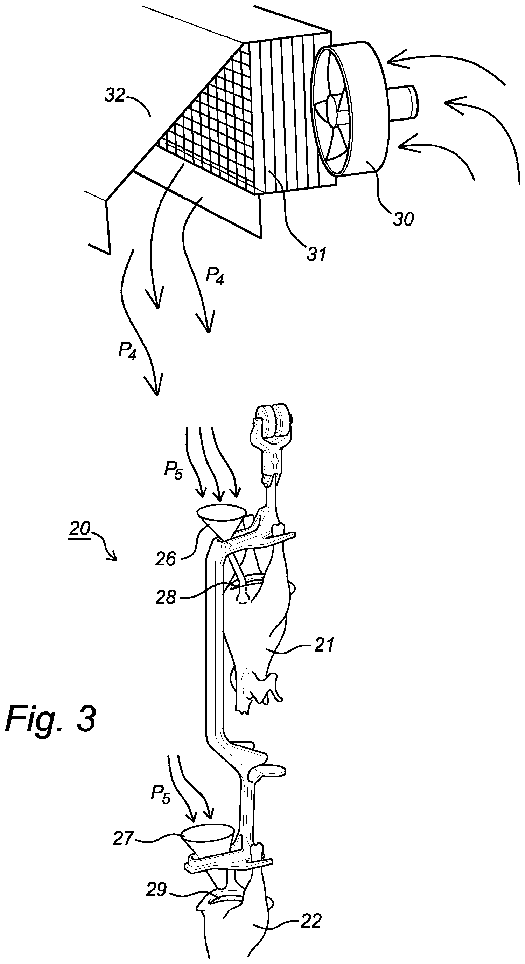

In figure 3 the loaded shackle 20 as shown in figure 2B is shown including schematic fluid flows. As part of a cooling unit, that is not further shown in this figure, a blower 30 (fan) feeds a fluid flow (see arrow P₃) to a cooler 31 for cooling the fluid flow (P₃) and to forward the cooled fluid flow (see arrows P₄) to via a guide surface 32 to the shackle 20. The cooled fluid (P₄) is send to the funnels 26, 27 of the shackle 20 (see arrows P₅) so to enter the poultry carcasses 21, 22 via the anal apertures 28, 29.

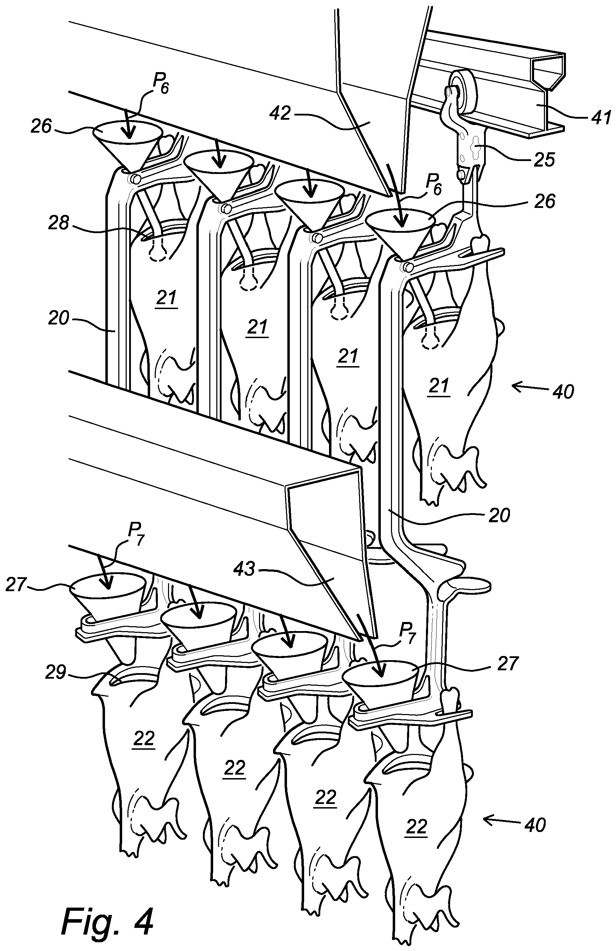

In figure 4 perspective view a larger part of a loaded poultry cooling unit 40 according the present invention is shown holding plural shackles 20 as disclosed in the figures 2B and 3. The carriages 25 of shackles 20 are guided along a rail 41 such that fluid outfeed nozzles 42, 43 are positioned in line with the rail 41 so to feed the cooled fluid flowing out of the nozzles (see arrows P₆ and P₇) in the direction of the funnels 26, 27 of the shackles 20. The whole assembly of the shackles 20, rail 41 and outfeed nozzles 42, 43 is placed in an enclosed space (e.g. a cooling tunnel).

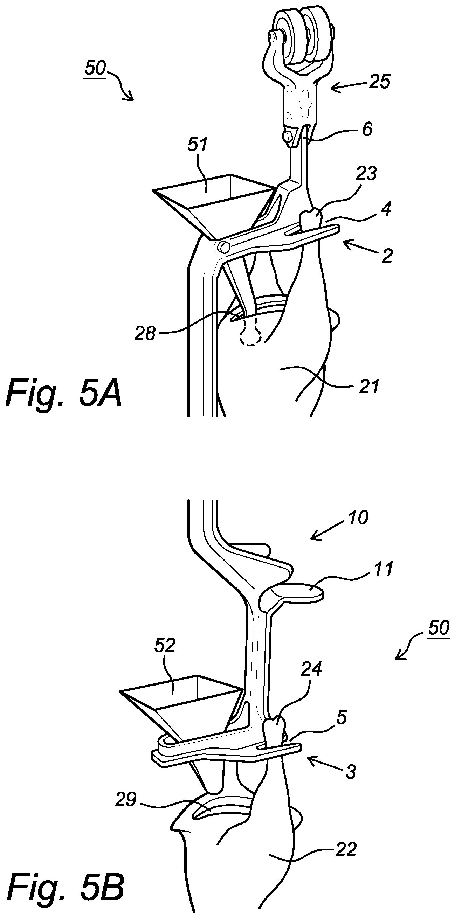

Figures 5A and 5B shows parts of an_alternative embodiment of a shackle 50 according the present invention. The technical features identical to the features of the shackles 1, 20 as shown in the previous figures are identified with identical reference signs. Different form the funnels 26, 27 as disclosed before here funnels 51, 52 are bigger so they are easier to feed a (circulating) fluid flow in a cooling unit through the funnels 51, 52 into the apertures 28, 29 in the poultry carcasses 21, 22.

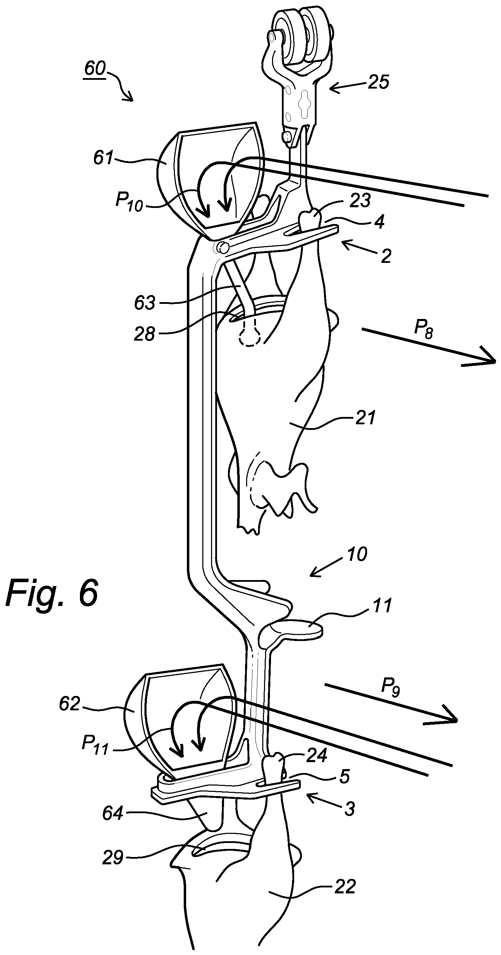

Figure 6 shows a third alternative embodiment of a shackle 60 according the present invention (again using identical reference signs there were possible). Instead of using funnels 26, 27; 51, 52 here the shackle is provided with scoops (spoons) 61, 62. Due to the forward movement of the shackle 60 (see arrows Ps, P₉) a relative fluid flow (see arrows P₁₀, P₁₁) will result that is "scooped" by the spoons 61, 62 to be guided through guides 63, 64 connecting to the spoons 61, 62 to and into the poultry carcasses 21,22.

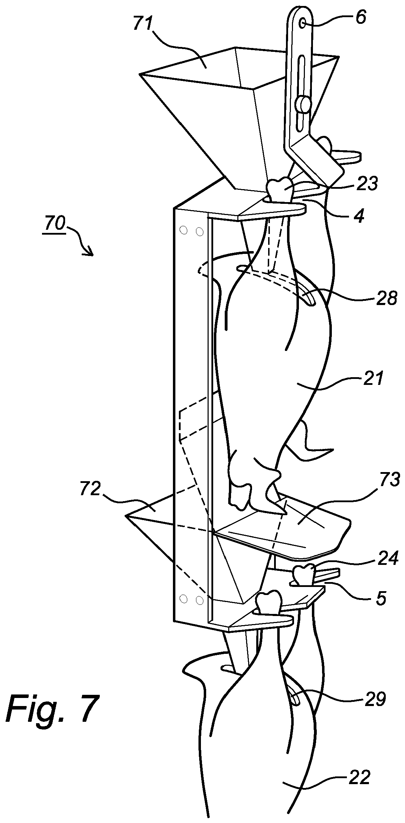

Figure 7 shows a forth alternative embodiment of a shackle 70 according the present invention. The shackle 70 here has square fluid guiding funnels 71, 72 and a relative flat liquid receptor 73 to prevent liquid dripping from the upper poultry carcass 21 onto the lower poultry carcass 22.

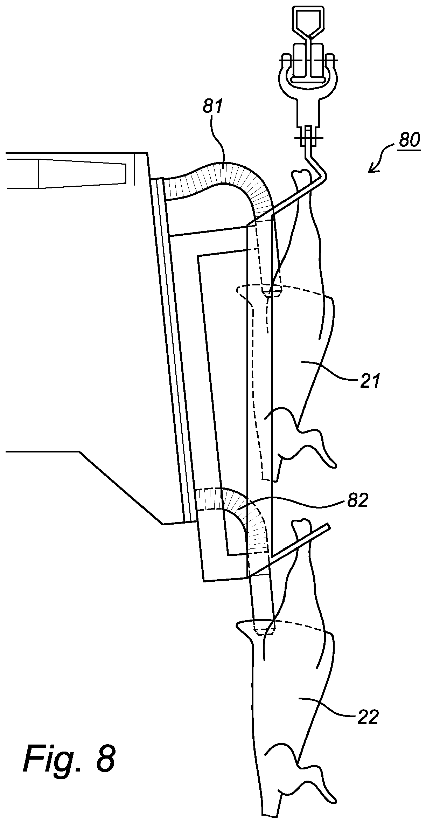

In figure 8 fifth alternative embodiment of a shackle 80 according the present invention is shown. Here the fluid is guided trough hoses 81, 82 that are stationary coupled to the shackle 80. The fluid flow form the hoses 81, 82 can thus be guided towards the poultry carcasses with minimal loss. The hoses 81, 82 can be coupled and uncoupled with the shackle 80 if desired; e.g. by lowering and lifting the hoses 81, 82 at certain position positions.

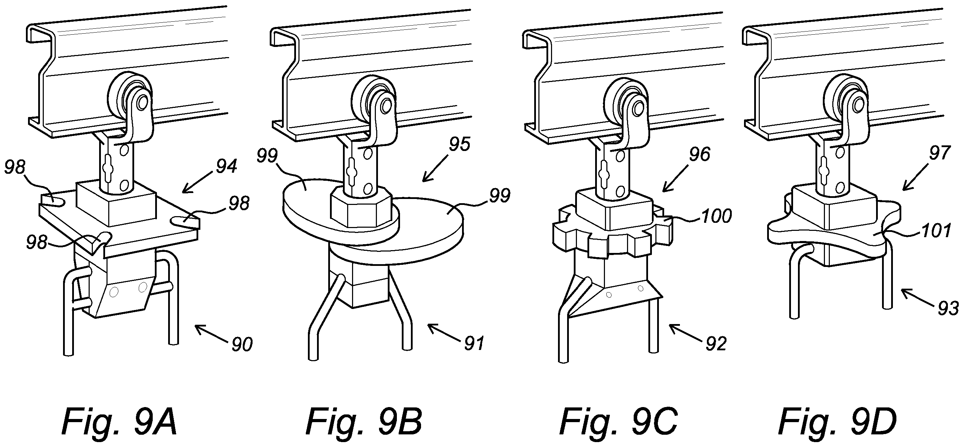

In figures 9A - 9D four detailed views on the topside of shackles 90, 91, 92, 93 according the present invention are shown provided with various hinge structures 94, 95, 96, 97. The hinge structure 94 in figure 9A has four grooves 98that enable the shackle 90 to be gripped and turned by an external turning device (not shown here). The hinge structure 95 in figure 9B has two CAM disks 99 that enable a CAM guide (also not shown here) to turn the shackle 91. The shackle 92 (figure 9C) has a toothed wheel 100 that enables external exertion of force to rotate the shackle 92. In figure 9D a Maltese cross 101 is incorporated in the shackle 93 to enable rotation.

## Claims

1. Shackle (1, 20, 60, 70, 80, 90, 91, 92, 93) for hanging poultry transportation provided with at least one fluid flow guide surface (12, 13) for directing a fluid flow towards a position wherein the poultry (21, 22) is to be held by the shackle, wherein a poultry holding position (2, 3) is provided by two narrowing apertures (4, 5) for holding poultry legs, **characterised in that** between two cooperating narrowing apertures (4, 5) for holding poultry legs an opening (8, 9) in the shackle (1, 20, 60, 70, 80, 90, 91, 92, 93) is provided; and **in that** a fluid flow guide (26, 27, 51, 52, 61, 62, 71, 72, 81, 82) connects to the opening (8, 9) in the shackle between two cooperating narrowing apertures (4, 5).

2. Shackle (1, 20, 60, 70, 80, 90, 91, 92, 93) according to claim 1, **characterised in that** the shackle (1, 20, 60, 70, 80, 90, 91, 92, 93) is provided with at least two poultry holding positions (2, 3).

3. Shackle (1, 20, 60, 70, 80, 90, 91, 92, 93) according to claim 1 or 2, **characterised in that** the shackle (1, 20, 60, 70, 80, 90, 91, 92, 93) is provided with an attachment (6) for coupling the shackle (1, 20, 60, 70, 80, 90, 91, 92, 93) to a transportation system.

4. Shackle (1, 20, 60, 70, 80, 90, 91, 92, 93) according to claim 3, **characterised in that** the coupling and the poultry holding positions (2, 3) are placed in line.

5. Shackle (1, 20, 60, 70, 80, 90, 91, 92, 93) according any of the preceding claims, **characterised in that** the shackle (1, 20, 60, 70, 80, 90, 91, 92, 93) is provided with a fluid flow guide (26, 27, 51, 52, 61, 62, 71, 72, 81, 82) that leads towards a poultry holding position (2, 3).

6. Shackle (1, 20, 60, 70, 80, 90, 91, 92, 93) according any of the preceding claims, **characterised in that** the shackle (1, 20, 60, 70, 80, 90, 91, 92, 93) is provided with a contact element that is at least partially located in a poultry holding position (2, 3).

7. Shackle (1, 20, 60, 70, 80, 90, 91, 92, 93) according claim 6, **characterised in that** the contact element is a fluid flow guide.

8. Shackle (1, 20, 60, 70, 80, 90, 91, 92, 93) according any of the preceding claims, **characterised in that** the shackle (1, 20, 60, 70, 80, 90, 91, 92, 93) is provided with liquid reception means (10).

9. Shackle (1, 20, 60, 70, 80, 90, 91, 92, 93) according claim 8, **characterised in that** the liquid reception means (10) are provided with at least one liquid outfeed (11).

10. Shackle (1, 20, 60, 70, 80, 90, 91, 92, 93) according any of the preceding claims, **characterised in that** the shackle (1, 20, 60, 70, 80, 90, 91, 92, 93) is provided with at least one coupling element for coupling the shackle with another shackle (1, 20, 60, 70, 80, 90, 91, 92, 93).

11. Shackle (1, 20, 60, 70, 80, 90, 91, 92, 93) according any of the preceding claims, **characterised in that** the shackle (1, 20, 60, 70, 80, 90, 91, 92, 93) is rotatable.

12. Poultry cooling unit (40) comprising:
- a frame;
- a driven advancing element carried by the frame;
- an enclosed space accommodating at least a part of the frame and the driven advancing element, and
- a cooler for cooling at a least part of the interior of the enclosed space,
wherein the cooling unit also comprises a plurality of shackles (1, 20, 60, 70, 80, 90, 91, 92, 93) according any of the preceding claims, which shackles (1, 20, 60, 70, 80, 90, 91, 92, 93) are coupled to the advancing element.

13. Cooling unit according claim 12, **characterised in that** adjoining shackles (1, 20, 60, 70, 80, 90, 91, 92, 93) are linked.

14. Cooling unit according claim 12 or 13, **characterised in that** the cooling unit is provided with at least one blower (30) for creating a fluid flow directed towards the fluid flow guide surfaces (12, 13) of the shackles (1, 20, 60, 70, 80, 90, 91, 92, 93).

15. Cooling unit according claims 14, **characterised in that** the blower for creating a fluid flow is provided with a nozzle (42, 43) that is directed towards the shackles (1, 20, 60, 70, 80, 90, 91, 92, 93).

16. Cooling unit according claims 14 or 15, **characterised in that** the cooling unit is provided with flow guides (32) that are connected to the advancing element.

17. Method for cooling of hanging poultry, comprising the method steps;
A) hanging poultry (21, 22) on the poultry holding positions of shackles (1, 20, 60, 70, 80, 90, 91, 92, 93);
B) transporting the loaded shackles (1, 20, 60, 70, 80, 90, 91, 92, 93) along a transport path;
C) directing a fluid flow to the shackles during the transportation of the loaded shackles (1, 20, 60, 70, 80, 90, 91, 92, 93) along the transport path; and
D) reflecting the fluid flow directed from the shackles (1, 20, 60, 70, 80, 90, 91, 92, 93) to the poultry (21, 22) hanging on the shackles to the poultry.

18. Method for poultry cooling according claim 17, **characterised in that** during step A) multiple poultry (21, 22) are hanged on a shackle (1, 20, 60, 70, 80, 90, 91, 92, 93).

19. Method for poultry cooling according claim 17 or 18, **characterised in that** the fluid flow directed to the shackles during step C) is a conditioning fluid flow.

20. Method for poultry cooling according any of the claims 17 - 19, **characterised in that** during step D) the fluid flow is reflected to an internal aperture in the poultry (21, 22) hanging on the shackles (1, 20, 60, 70, 80, 90, 91, 92, 93).

21. Method for poultry cooling according any of the claims 17 - 20, **characterised in that** during step A) a fluid flow guide (26, 27, 51, 52, 61, 62, 71, 72, 81, 82) is inserted in the poultry (21, 22).

## Patentansprüche

1. Haken (1, 20, 60, 70, 80, 90, 91, 92, 93) für den Transport von hängendem Geflügel, der mit mindestens einer Fluidstromführungsfläche (12, 13) zum Leiten eines Fluidstroms zu einer Position, in der das Geflügel (21, 22) durch den Haken gehalten werden soll, versehen ist, wobei die Geflügelhalteposition (2, 3) durch zwei sich verengende Aussparungen (4, 5) zum Halten von Geflügelbeinen bereitgestellt wird, **dadurch gekennzeichnet, dass** zwischen den beiden zusammenwirkenden sich verengenden Aussparungen (4, 5) zum Halten von Geflügelbeinen eine Öffnung (8, 9) in dem Haken (1, 20, 60, 70, 80, 90, 91, 92, 93) vorgesehen ist; und **dass** eine Fluidstromführung (26, 27, 51, 52, 61, 62, 71, 72, 81, 82) mit der Öffnung (8, 9) in dem Haken zwischen zwei zusammenwirkenden sich verengenden Aussparungen (4, 5) verbunden ist.

2. Haken (1, 20, 60, 70, 80, 90, 91, 92, 93) nach Anspruch 1, **dadurch gekennzeichnet, dass** der Haken (1, 20, 60, 70, 80, 90, 91, 92, 93) mit mindestens zwei Geflügelhaltepositionen (2, 3) versehen ist.

3. Haken (1, 20, 60, 70, 80, 90, 91, 92, 93) nach Anspruch 1 oder 2, **dadurch gekennzeichnet, dass** der Haken (1, 20, 60, 70, 80, 90, 91, 92, 93) mit einer Befestigung (6) zum Koppeln des Hakens (1, 20, 60, 70, 80, 90, 91, 92, 93) mit einem Transportsystem versehen ist.

4. Haken (1, 20, 60, 70, 80, 90, 91, 92, 93) nach Anspruch 3, **dadurch gekennzeichnet, dass** die Kopplung und die Geflügelhaltepositionen (2, 3) reihenförmig platziert sind.

5. Haken (1, 20, 60, 70, 80, 90, 91, 92, 93) nach einem der vorhergehenden Ansprüche, **dadurch gekennzeichnet, dass** der Haken (1, 20, 60, 70, 80, 90, 91, 92, 93) mit einer Fluidstromführung (26, 27, 51, 52, 61, 62, 71, 72, 81, 82) versehen ist, die zu einer Geflügelhalteposition (2, 3) führt.

6. Haken (1, 20, 60, 70, 80, 90, 91, 92, 93) nach einem der vorhergehenden Ansprüche, **dadurch gekennzeichnet, dass** der Haken (1, 20, 60, 70, 80, 90, 91, 92, 93) mit einem Kontaktelement versehen ist, das zumindest teilweise in einer Geflügelhalteposition (2, 3) positioniert ist.

7. Haken (1, 20, 60, 70, 80, 90, 91, 92, 93) nach Anspruch 6, **dadurch gekennzeichnet, dass** das Kontaktelement eine Fluidstromführung ist.

8. Haken (1, 20, 60, 70, 80, 90, 91, 92, 93) nach einem der vorhergehenden Ansprüche, **dadurch gekennzeichnet, dass** der Haken (1, 20, 60, 70, 80, 90, 91, 92, 93) mit Flüssigkeitsaufnahmemitteln (10) versehen ist.

9. Haken (1, 20, 60, 70, 80, 90, 91, 92, 93) nach Anspruch 8, **dadurch gekennzeichnet, dass** die Flüssigkeitsaufnahmemittel (10) mit mindestens einer Flüssigkeitsabfuhrvorrichtung (11) versehen sind.

10. Haken (1, 20, 60, 70, 80, 90, 91, 92, 93) nach einem der vorhergehenden Ansprüche, **dadurch gekennzeichnet, dass** der Haken (1, 20, 60, 70, 80, 90, 91, 92, 93) mit mindestens einem Kopplungselement zum Koppeln des Hakens mit einem anderen Haken (1, 20, 60, 70, 80, 90, 91, 92, 93) versehen ist.

11. Haken (1, 20, 60, 70, 80, 90, 91, 92, 93) nach einem der vorhergehenden Ansprüche, **dadurch gekennzeichnet, dass** der Haken (1, 20, 60, 70, 80, 90, 91, 92, 93) drehbar ist.

12. Geflügelkühleinheit (40), die Folgendes umfasst:
- einen Rahmen;
- ein angetriebenes Vortriebelement, das durch den Rahmen getragen wird;
- einen eingeschlossenen Raum, in dem zumindest ein Teil des Rahmens und das angetriebene Vortriebelement untergebracht sind, und
- einen Kühler zum Kühlen mindestens eines Teils des Inneren des eingeschlossenen Raums,
wobei die Kühleinheit des Weiteren mehrere Haken (1, 20, 60, 70, 80, 90, 91, 92, 93) nach einem der vorhergehenden Ansprüche umfasst, wobei die Haken (1, 20, 60, 70, 80, 90, 91, 92, 93) mit dem Vortriebelement gekoppelt sind.

13. Kühleinheit nach Anspruch 12, **dadurch gekennzeichnet, dass** benachbarte Haken (1, 20, 60, 70, 80, 90, 91, 92, 93) verbunden sind.

14. Kühleinheit nach Anspruch 12 oder 13, **dadurch gekennzeichnet, dass** die Kühleinheit mit mindestens einem Gebläse (30) zur Erzeugung eines Fluidstroms, der auf die Fluidstromführungsflächen (12, 13) der Haken (1, 20, 60, 70, 80, 90, 91, 92, 93) gerichtet ist, versehen ist.

15. Kühleinheit nach Anspruch 14, **dadurch gekennzeichnet, dass** das Gebläse zur Erzeugung eines Fluidstroms mit einer Düse (42, 43), die auf die Haken (1, 20, 60, 70, 80, 90, 91, 92, 93) gerichtet ist, versehen ist.

16. Kühleinheit nach Anspruch 14 oder 15, **dadurch gekennzeichnet, dass** die Kühleinheit mit Stromführungen (32), die mit dem Vortriebelement verbunden sind, versehen ist.

17. Verfahren zum Kühlen von hängendem Geflügel, das die folgenden Verfahrensschritte umfasst:
A) Hängen von Geflügel (21, 22) in die Geflügelhaltepositionen der Haken (1, 20, 60, 70, 80, 90, 91, 92, 93);
B) Transportieren der beladenen Haken (1, 20, 60, 70, 80, 90, 91, 92, 93) entlang einem Transportweg;
C) Leiten eines Fluidstroms zu den Haken während des Transports der beladenen Haken (1, 20, 60, 70, 80, 90, 91, 92, 93) entlang dem Transportweg; und
D) Zielen des von den Haken (1, 20, 60, 70, 80, 90, 91, 92, 93) zu dem an den Haken hängenden Geflügel (21, 22) geleiteten Fluidstroms auf das Geflügel.

18. Verfahren zur Geflügelkühlung nach Anspruch 17, **dadurch gekennzeichnet, dass** während Schritt A) mehrere Geflügel (21, 22) an einen Haken (1, 20, 60, 70, 80, 90, 91, 92, 93) gehängt werden.

19. Verfahren zur Geflügelkühlung nach Anspruch 17 oder 18, **dadurch gekennzeichnet, dass** der während Schritt C) auf die Haken gerichtete Fluidstrom ein Klimatisierungsfluidstrom ist.

20. Verfahren zur Geflügelkühlung nach einem der Ansprüche 17-19, **dadurch gekennzeichnet, dass** der Fluidstrom während Schritt D) auf eine innere Aussparung in dem an den Haken (1, 20, 60, 70, 80, 90, 91, 92, 93) hängenden Geflügel (21, 22) gezielt wird.

21. Verfahren zur Geflügelkühlung nach einem der Ansprüche 17-20, **dadurch gekennzeichnet, dass** während Schritt A) eine Fluidstromführung (26, 27, 51, 52, 61, 62, 71, 72, 81, 82) in das Geflügel (21, 22) eingeführt wird.

## Revendications

1. Étrier (1, 20, 60, 70, 80, 90, 91, 92, 93) pour le transport de volailles suspendues, muni d'au moins une surface-guide (12, 13) d'écoulement de fluide servant à diriger un écoulement de fluide vers une position dans laquelle la volaille (21, 22) est appelée à être maintenue par l'étrier, une position (2, 3) de maintien de volaille étant aménagée par deux ouvertures (4, 5) en rétrécissement servant à maintenir des pattes de volaille, **caractérisé en ce qu**'entre deux ouvertures (4, 5) en rétrécissement qui coopèrent pour maintenir des pattes de volaille, une ouverture (8, 9) dans l'étrier (1, 20, 60, 70, 80, 90, 91, 92, 93) est aménagée ; et **en ce qu'**un guide (26, 27, 51, 52, 61, 62, 71, 72, 81, 82) d'écoulement de fluide se raccorde à l'ouverture (8, 9) dans l'étrier entre deux ouvertures (4, 5) en rétrécissement qui coopèrent.

2. Étrier (1, 20, 60, 70, 80, 90, 91, 92, 93) selon la revendication 1, **caractérisé en ce que** l'étrier (1, 20, 60, 70, 80, 90, 91, 92, 93) est muni d'au moins deux positions (2, 3) de maintien de volaille.

3. Étrier (1, 20, 60, 70, 80, 90, 91, 92, 93) selon la revendication 1 ou 2, **caractérisé en ce que** l'étrier (1, 20, 60, 70, 80, 90, 91, 92, 93) est muni d'une fixation (6) servant à coupler l'étrier (1, 20, 60, 70, 80, 90, 91, 92, 93) à un système de transport.

4. Étrier (1, 20, 60, 70, 80, 90, 91, 92, 93) selon la revendication 3, **caractérisé en ce que** l'accouplement et les positions (2, 3) de maintien de volaille sont placés en ligne.

5. Étrier (1, 20, 60, 70, 80, 90, 91, 92, 93) selon l'une quelconque des revendications précédentes, **caractérisé en ce que** l'étrier (1, 20, 60, 70, 80, 90, 91, 92, 93) est muni d'un guide (26, 27, 51, 52, 61, 62, 71, 72, 81, 82) d'écoulement de fluide qui conduit vers une position (2, 3) de maintien de volaille.

6. Étrier (1, 20, 60, 70, 80, 90, 91, 92, 93) selon l'une quelconque des revendications précédentes, **caractérisé en ce que** l'étrier (1, 20, 60, 70, 80, 90, 91, 92, 93) est muni d'un élément de contact qui est au moins partiellement situé dans une position (2, 3) de maintien de volaille.

7. Étrier (1, 20, 60, 70, 80, 90, 91, 92, 93) selon la revendication 6, **caractérisé en ce que** l'élément de contact est un guide d'écoulement de fluide.

8. Étrier (1, 20, 60, 70, 80, 90, 91, 92, 93) selon l'une quelconque des revendications précédentes, **caractérisé en ce que** l'étrier (1, 20, 60, 70, 80, 90, 91, 92, 93) est muni de moyens (10) de réception de liquide.

9. Étrier (1, 20, 60, 70, 80, 90, 91, 92, 93) selon la revendication 8, **caractérisé en ce que** les moyens (10) de réception de liquide sont munis d'au moins une évacuation (11) de liquide.

10. Étrier (1, 20, 60, 70, 80, 90, 91, 92, 93) selon l'une quelconque des revendications précédentes, **caractérisé en ce que** l'étrier (1, 20, 60, 70, 80, 90, 91, 92, 93) est muni d'au moins un élément d'accouplement servant à accoupler l'étrier avec un autre étrier (1, 20, 60, 70, 80, 90, 91, 92, 93).

11. Étrier (1, 20, 60, 70, 80, 90, 91, 92, 93) selon l'une quelconque des revendications précédentes, **caractérisé en ce que** l'étrier (1, 20, 60, 70, 80, 90, 91, 92, 93) est pivotant.

12. Unité (40) de refroidissement de volailles comportant :
- une ossature ;
- un élément avançant entraîné porté par l'ossature ;
- un espace clos renfermant au moins une partie de l'ossature et l'élément avançant entraîné, et
- un refroidisseur servant à refroidir au moins une partie de l'intérieur de l'espace clos,
l'unité de refroidissement comportant également une pluralité d'étriers (1, 20, 60, 70, 80, 90, 91, 92, 93) selon l'une quelconque des revendications précédentes, lesdits étriers (1, 20, 60, 70, 80, 90, 91, 92, 93) étant couplés à l'élément avançant.

13. Unité de refroidissement selon la revendication 12, **caractérisée en ce que** des étriers (1, 20, 60, 70, 80, 90, 91, 92, 93) adjacents sont liés.

14. Unité de refroidissement selon la revendication 12 ou 13, **caractérisée en ce que** l'unité de refroidissement est munie d'au moins une soufflante (30) servant à créer un écoulement de fluide dirigé vers les surfaces-guides (12, 13) d'écoulement de fluide des étriers (1, 20, 60, 70, 80, 90, 91, 92, 93).

15. Unité de refroidissement selon la revendication 14, **caractérisée en ce que** la soufflante servant à créer un écoulement de fluide est munie d'une buse (42, 43) qui est dirigée vers les étriers (1, 20, 60, 70, 80, 90, 91, 92, 93).

16. Unité de refroidissement selon les revendications 14 ou 15, **caractérisée en ce que** l'unité de refroidissement est munie de guides (32) d'écoulement qui sont liés à l'élément avançant.

17. Procédé pour le refroidissement de volailles suspendues, comportant les étapes de procédé consistant à :
A) suspendre des volailles (21, 22) sur les positions de maintien de volailles d'étriers (1, 20, 60, 70, 80, 90, 91, 92, 93) ;
B) transporter les étriers chargés (1, 20, 60, 70, 80, 90, 91, 92, 93) le long d'un trajet de transport ;
C) diriger un écoulement de fluide vers les étriers pendant le transport des étriers chargés (1, 20, 60, 70, 80, 90, 91, 92, 93) le long du trajet de transport ; et
D) renvoyer l'écoulement de fluide dirigé des étriers (1, 20, 60, 70, 80, 90, 91, 92, 93) vers les volailles (21, 22) suspendues sur les étriers vers les volailles.

18. Procédé de refroidissement de volailles selon la revendication 17, **caractérisé en ce que,** pendant l'étape A), des volailles multiples (21, 22) sont suspendues sur un étrier (1, 20, 60, 70, 80, 90, 91, 92, 93).

19. Procédé de refroidissement de volailles selon la revendication 17 ou 18, **caractérisé en ce que** l'écoulement de fluide dirigé vers les étriers pendant l'étape C) est un écoulement de fluide de conditionnement.

20. Procédé de refroidissement de volailles selon l'une quelconque des revendications 17 à 19, **caractérisé en ce que,** pendant l'étape D), l'écoulement de fluide est renvoyé vers une ouverture interne dans les volailles (21, 22) suspendues sur les étriers (1, 20, 60, 70, 80, 90, 91, 92, 93).

21. Procédé de refroidissement de volailles selon l'une quelconque des revendications 17 à 20, **caractérisé en ce que,** pendant l'étape A), un guide (26, 27, 51, 52, 61, 62, 71, 72, 81, 82) d'écoulement de fluide est inséré dans les volailles (21, 22).
